# EUROPEAN PATENT APPLICATION

(11) **EP 4 751 840 A1**
(43) Date of publication of application: **03.06.2026**
(21) Application number: 24215751.9
(22) Date of filing: 27.11.2024
(51) Int. Cl.: B23P 6/00, B23P 15/28, B23B 27/16, B23C 5/20, B22F 7/06, B33Y 10/00, B33Y 50/00, B33Y 80/00, B22F 10/25, B22F 10/28, B22F 10/66

(54) **A METHOD FOR REPAIRING A CUTTING TOOL COMPONENT**

(71) Applicant: Seco Tools AB, 737 82 Fagersta (SE)
(72) Inventor: BITE, Ingemar, 737 82 Fagersta (SE)
(74) Representative: Sandvik

(57) **Abstract**

The invention relates to a method (100) for repairing a cutting tool component (200) comprising a damaged portion (202). The method (100) comprising the step of removing (102) the damaged portion (202) by machining the cutting tool component (200) into an interim component (210) comprising a machined surface (212). The machined surface (212) comprises a build surface (214) comprising a second outer boundary (220) of a pre-determined shape, and a transition surface (216) surrounding the build surface (214). The method (200) further comprises the steps of placing (108) the interim component (210) in an additive manufacturing device; determining (110) a position and an orientation of the second outer boundary (220); and additively manufacturing (112) a replacement portion (240) on the build surface (214).

## Description

### TECHNICAL FIELD

The present invention relates to a method for repairing a cutting tool component.

### BACKGROUND

In the cutting industry, cutting tool components are used to cut a workpiece according to a pre-defined cutting program. The cutting programs are designed in order to reduce the risk of damages on the cutting tool components. Despite this, damages on the cutting tool components are a common problem in the cutting industry. Depending on the amount of damages, the cutting tool component might need to be replaced with a new one. Depending on the type of component, this may add a significant cost for the user. Additionally, requiring new cutting tool components will increase the user's environmental impact.

### SUMMARY OF THE INVENTION

It is an object of the present invention to overcome, or at least partly overcome, said problem by introducing a method for repairing a cutting tool component.

The object of the present invention is achieved by means of a method for repairing a cutting tool component comprising a damaged portion, wherein the method comprises the step of:
- removing the damaged portion, wherein
   the step of removing the damaged portion comprises the step of:
      - machining the cutting tool component into an interim component comprising a machined surface, wherein the machined surface comprises:
         - a build surface having a pre-determined geometry; and
         - a transition surface surrounding the build surface; and wherein
            the machined surface has a first outer boundary, and wherein the build surface has a second outer boundary of a pre-determined shape, wherein the second outer boundary is arranged in a plane P, and wherein the second outer boundary is completely located within the first outer boundary, as seen perpendicular to the plane P toward the build surface, and wherein
            the transition surface extends from the second outer boundary to the first outer boundary, and wherein
            the transition surface is arranged at a reflex angle relative the build surface, as seen in a cross-sectional plane perpendicular to the plane P, and wherein
   the method further comprises the steps of:
      - placing the interim component in an additive manufacturing device;
      - determining a position and an orientation of the second outer boundary; and
      - additively manufacturing a replacement portion on the build surface, wherein the replacement portion comprises an interface surface which is arranged in contact with the build surface, wherein the interface surface has an interface outer boundary, wherein the interface outer boundary is equal to the second outer boundary, and wherein the interface outer boundary is aligned with the second outer boundary.

By removing the damaged portion and replace it with an additively manufactured portion, the cost and the environmental impact of the damage of the cutting tool component are reduced compared to replacing it with a new one.

The machining of the cutting tool component into an interim component may comprise a single or a plurality of machining steps. The machining of the cutting tool component may comprise any suitable machining operation known in the art, such as sawing, shearing, milling, grinding, or electrical discharge machining (EDM). The machining of the transition surface is preferably made by a milling operation.

Additively manufacturing a component on top of a pre-manufactured base device is commonly known as hybrid manufacturing. When manufacturing hybrid articles, it is crucial to have accurate information regarding the position and the orientation of the base device, in order to position the article correctly on top of the base device.

By machining a transition surface surrounding the build surface, the step of determining the position and the orientation of the second outer boundary is facilitated since the second outer boundary have a known pre-determined shape. Without the transition surface, it is very difficult to know how the build surface actually looks like due to potential deformations in the cutting tool component resulting from the usage of the cutting tool component.

The transition surface may be e.g. a radius surface, a chamfer, a bevel, a convex fillet, a concave fillet, any other surface, or a combination of these.

The additive manufacturing device may be any type of suitable additive manufacturing device known in the art.

The step of determining the position and the orientation of the second outer boundary is made by any suitable method known in the art, e.g. scanning the machined surface by a light source, performing image analysis of the machined surface, or scanning the measurement surface with a measurement probe.

The step of additively manufacturing the replacement portion is made by any suitable additive manufacturing method known in the art such as a powder bed fusion method, a binder jetting method or a direct energy deposition method.

The replacement portion is preferably additively manufactured from a computer-aided design (CAD) model of the replacement portion. The replacement portion may have any suitable shape. It may either be an exact copy of the corresponding part on the original cutting tool component, or it may be an adjusted, or updated, design of the corresponding part on the original cutting tool component.

Having the interface outer boundary aligned with the second outer boundary is to be understood as the interface outer boundary and the second outer boundary have the same orientation in space.

According to an embodiment, the step of additively manufacturing the replacement portion on the build surface comprises the step of aligning the CAD-model of the replacement portion with the build surface.

The cutting tool component is preferably configured to be used in a metal cutting operation.

According to an embodiment, the transition surface is arranged at a reflex angle relative the build surface, as seen in any cross-sectional plane perpendicular to the plane P.

According to an embodiment, the reflex angle has a constant value, in the circumferential direction of the second outer boundary.

According to an embodiment, the second outer boundary comprises a plurality of boundary segments, wherein at least two of the boundary segments are straight segments.

By having at least two straight segments, the step of determining the position and the orientation of the second outer boundary is further facilitated.

According to an embodiment, the straight segments are parallel to each other.

By having the straight segments arranged parallel to each other, the step of determining the position and the orientation of the second outer boundary is even further facilitated.

According to an embodiment, the build surface is a planar surface.

By having the build surface arranged as a planar surface, the step of additively manufacturing the replacement portion on the build surface, is further facilitated. Of course, the planar build surface may have a surface roughness resulting from the machining operation.

According to an embodiment, the cutting tool component comprises an outer peripheral surface, and wherein the first outer boundary is provided in an intersection between the machined surface and the outer peripheral surface.

According to an embodiment, the cutting tool component is a toolholder comprising a cutting element interface configured to carry a cutting element.

The toolholder is preferably a steel component.

The cutting element is preferably a cutting element configured for performing a metal cutting operation. The cutting element might be e.g. a cutting insert, a drill bit or an endmill.

According to an embodiment, the method further comprises the step of:
- cleaning the build surface.

By cleaning the build surface, the step of determining the position and the orientation of the second outer boundary and the step of additively manufacturing the replacement portion on the build surface is further facilitated since potential residues from the previous machining operation are removed.

The step of cleaning the build surface may comprise e.g. water blasting or grit blasting.

According to an embodiment, the method further comprises the step of:
- performing a post-manufacturing operation on the replacement portion.

By performing a post-manufacturing operation on the replacement portion, fine adjustments of the final shape of the replacement portion can be made.

According to an embodiment, the post-manufacturing operation comprises the step of machining at least one surface on the replacement portion.

According to an embodiment, the post-manufacturing operation comprises the step of machining a cutting element interface on the replacement portion.

The post-manufacturing portion might involve e.g. a milling operation, a grinding operation, a drilling operation, a threading operation, a turning operation, or a coating operation. According to an embodiment, the post-manufacturing operation comprises a heat-treatment operation.

According to an embodiment, the post-manufacturing operation is performed outside the additive manufacturing device.

### BRIEF DESCRIPTION OF THE DRAWINGS

Figure 1 illustrates a flowchart of a method for repairing a cutting tool component according to an embodiment of the invention.
Figure 2 schematically illustrates a perspective view of a cutting tool component according to an embodiment.
Figure 3 schematically illustrates a perspective view of an interim component according to an embodiment.
Figure 4 schematically illustrates an enlargement of the detail D1 in figure 3.
Figure 5 schematically illustrates a top view of the interim component illustrated in figure 3.
Figure 6 schematically illustrates a cross-sectional view of the interim component along the line V-V illustrated in figure 5.
Figure 7 schematically illustrates an enlargement of the detail D2 in figure 6.
Figure 8 schematically illustrates a perspective view of a replacement portion according to an embodiment arranged on top of the interim component illustrated in figure 3.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that the disclosure will be thorough and complete, and will fully convey the scope of the invention to those skilled in the art. Like reference numbers refer to like elements throughout. The elements illustrated in the drawings are not necessary according to scale. Some elements might have been enlarged in order to clearly illustrate those elements.

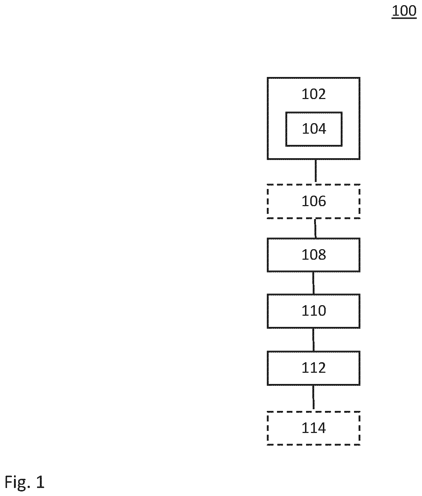

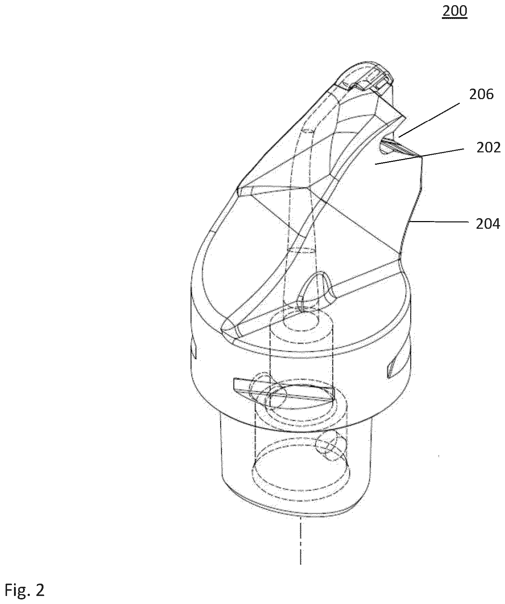

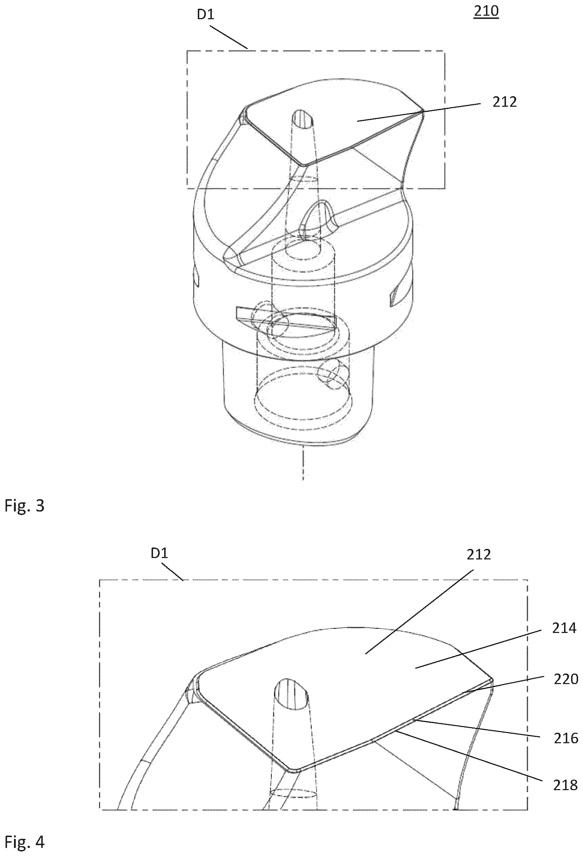

Figure 1 illustrates a flowchart of a method (100) for repairing a cutting tool component (200) comprising a damaged portion (202), cf. figure 2. The method (100) comprises the step of:
- removing (102) the damaged portion (202), wherein
   the step of removing (102) the damaged portion (202) comprises the step of:
   - machining (104) the cutting tool component (200) into an interim component (210) comprising a machined surface (212), cf. figure 3, wherein the machined surface (212) comprises:
      - a build surface (214) having a pre-determined geometry, cf. figure 4; and
      - a transition surface (216) surrounding the build surface (214), cf. figure 4.

The method (100) further comprises the steps of:
- cleaning (106) the build surface (214).
- placing (108) the interim component (210) in an additive manufacturing device;
- determining (110) a position and an orientation of the second outer boundary (220);
- additively manufacturing (112) a replacement portion (240) on the build surface (214); and
- performing (114) a post-manufacturing operation on the replacement portion (240).

Figure 2 schematically illustrates a perspective view of a cutting tool component (200) according to an embodiment comprising a damaged portion (202). The cutting tool component (200) is a toolholder comprising a cutting element interface (206) configured to carry a cutting element. The cutting tool component (200) comprises an outer peripheral surface (204). The cutting tool component (200) comprises an internal coolant channel.

Figure 3 schematically illustrates a perspective view of an interim component (210) according to an embodiment. The interim component (210) comprises a machined surface (212).

Figure 4 schematically illustrates an enlargement of the detail D1 in figure 3. The machined surface (212) comprises a build surface (214) having a pre-determined geometry, and a transition surface (216) surrounding the build surface (214). The machined surface (212) has a first outer boundary (218), and the build surface (214) has a second outer boundary (220) of a pre-determined shape.

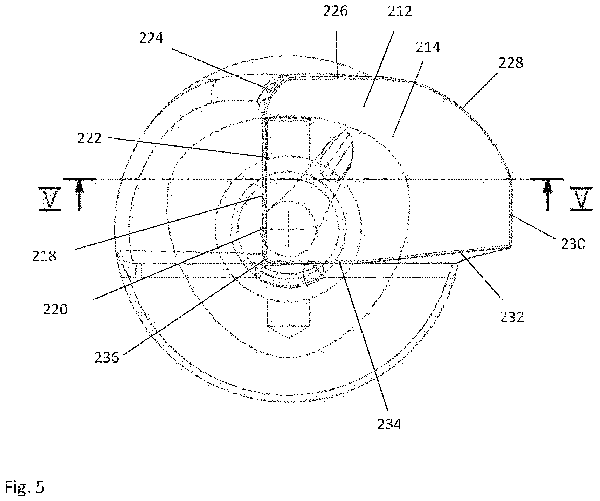

Figure 5 schematically illustrates a top view of the interim component (210). The second outer boundary (220) comprises a plurality of boundary segments (222, 224, 226, 228, 230, 232, 234, 236). The second outer boundary (220) is completely located within the first outer boundary (218).

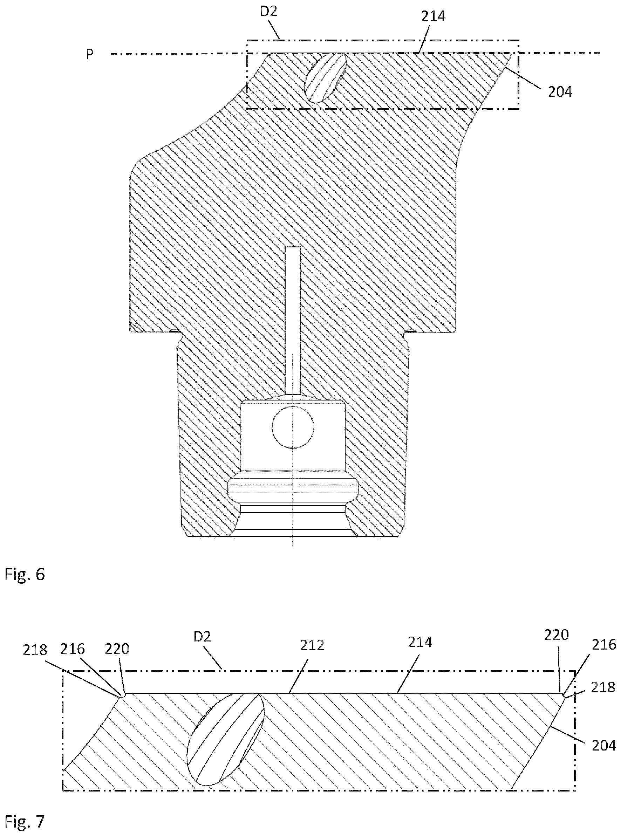

Figure 6 schematically illustrates a cross-sectional view of the interim component (210) along the line V-V illustrated in figure 5. The build surface (214) is a planar surface. The second outer boundary (220) is arranged in a plane P.

Figure 7 schematically illustrates an enlargement of the detail D2 in figure 6. The transition surface (216) extends from the second outer boundary (220) to the first outer boundary (218). The first outer boundary (218) is provided in an intersection between the machined surface (212) and the outer peripheral surface (204). The transition surface (216) is arranged at a reflex angle relative the build surface (214). The transition surface (216) is a radius surface.

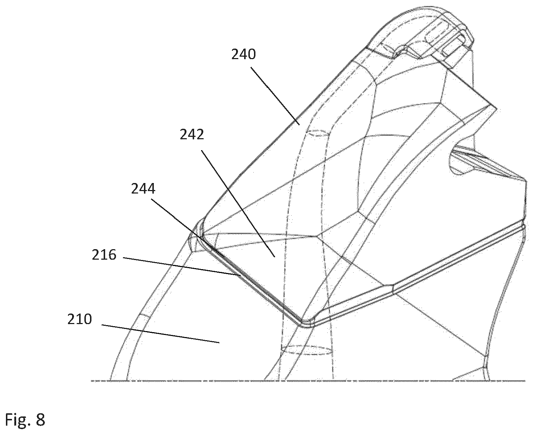

Figure 8 schematically illustrates a perspective view of a replacement portion (240) according to an embodiment arranged on top of the interim component (210). The replacement portion (240) is additively manufactured on the build surface (214). The replacement portion (240) comprises an interface surface (242) arranged in contact with the build surface (214). The interface surface (242) has an interface outer boundary (244). The interface outer boundary (244) is equal to the second outer boundary (220), and the interface outer boundary (242) is aligned with the second outer boundary (220). The replacement portion (240) comprises an internal coolant channel.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more". All structural and functional equivalents to the elements of the above-described embodiments that are known to those of ordinary skill in the art are expressly incorporated herein by reference and are intended to be encompassed hereby. In the exemplary figures, a broken line generally signifies that the feature within the broken line is optional.

## Claims

1. A method (100) for repairing a cutting tool component (200) comprising a damaged portion (202), wherein the method (100) comprises the step of:
- removing (102) the damaged portion (202), wherein
the step of removing (102) the damaged portion (202) comprises the step of:
- machining (104) the cutting tool component (200) into an interim component (210) comprising a machined surface (212), wherein the machined surface (212) comprises:
- a build surface (214) having a pre-determined geometry; and
- a transition surface (216) surrounding the build surface (214); and wherein the machined surface (212) has a first outer boundary (218), and wherein the build surface (214) has a second outer boundary (220) of a pre-determined shape, wherein the second outer boundary (220) is arranged in a plane P, and wherein the second outer boundary (220) is completely located within the first outer boundary (218), as seen perpendicular to the plane P toward the build surface (214), and wherein
the transition surface (216) extends from the second outer boundary (220) to the first outer boundary (218), and wherein
the transition surface (216) is arranged at a reflex angle relative the build surface (214), as seen in a cross-sectional plane perpendicular to the plane P, and wherein
the method (100) further comprises the steps of:
- placing (108) the interim component (210) in an additive manufacturing device;
- determining (110) a position and an orientation of the second outer boundary (220); and
- additively manufacturing (112) a replacement portion (240) on the build surface (214), wherein the replacement portion (240) comprises an interface surface (242) which is arranged in contact with the build surface (214), wherein the interface surface (242) has an interface outer boundary (244), wherein the interface outer boundary (244) is equal to the second outer boundary (220), and wherein the interface outer boundary (242) is aligned with the second outer boundary (220).

2. The method (100) according to claim 1, wherein the second outer boundary (220) comprises a plurality of boundary segments (222, 224, 226, 228, 230, 232, 234, 236), wherein at least two of the boundary segments are straight segments (222, 226, 230, 234).

3. The method (100) according to claim 2, wherein the straight segments (222, 230; 226, 234) are parallel to each other.

4. The method (100) according to any of the preceding claims, wherein the build surface (214) is a planar surface.

5. The method (100) according to any of the preceding claims, wherein the cutting tool component (200) comprises an outer peripheral surface (204), and wherein the first outer boundary (218) is provided in an intersection between the machined surface (212) and the outer peripheral surface (204).

6. The method (100) according to any of the preceding claims, wherein the cutting tool component (200) is a toolholder comprising a cutting element interface (206) configured to carry a cutting element.

7. The method (100) according to any of the preceding claims, wherein the method (100) further comprises the step of:
- cleaning (106) the build surface (214).

8. The method (100) according to any of the preceding claims, wherein the method (100) further comprises the step of:
- performing (114) a post-manufacturing operation on the replacement portion (240).
